Europäisches Patentamt

European Patent Office

Office européen des brevets

(19)

(11) Veröffentlichungsnummer: **0 311 789 B1**

## (12) EUROPÄISCHE PATENTSCHRIFT

(45) Veröffentlichungstag der Patentschrift: **25.03.92**

(51) Int. Cl.5: **B25H 3/00**, B25H 3/06

(21) Anmeldenummer: **88114744.1**

(22) Anmeldetag: **09.09.88**

(54) **Haltevorrichtung zur Aufnahme von Werkzeugen.**

(30) Priorität: **12.10.87 DE 3734453**
**22.03.88 DE 3809492**

(43) Veröffentlichungstag der Anmeldung:
**19.04.89 Patentblatt 89/16**

(45) Bekanntmachung des Hinweises auf die
Patenterteilung:
**25.03.92 Patentblatt 92/13**

(84) Benannte Vertragsstaaten:
**AT BE CH ES FR GB IT LI SE**

(56) Entgegenhaltungen:
**DE-C- 372 681         DE-C- 849 069**
**FR-A- 738 672         GB-A- 19 682**
**GB-A- 227 381         US-A- 1 389 486**
**US-A- 3 382 987       US-A- 4 090 302**
**US-A- 4 150 488**

(73) Patentinhaber: **Feder, Emil**
**Antonius-Raab-Strasse 1 Industriepark**
**W-3500 Kassel(DE)**

(72) Erfinder: **Feder, Emil**
**Antonius-Raab-Strasse 1 Industriepark**
**W-3500 Kassel(DE)**

(74) Vertreter: **Habbel, Hans-Georg, Dipl.-Ing.**
**Postfach 3429 Am Kanonengraben 11**
**W-4400 Münster(DE)**

## Beschreibung

Die Erfindung bezieht sich auf eine Haltevorrichtung zur Aufnahme von Werkzeugen gemäß dem Oberbegriff des Patentanspruchs 1.

Für die Aufnahme und Lagerung von beispielsweise zylindrischen Schneidwerkzeugen für die Metallbearbeitung, vorzugsweise von Spiralbohrern in verschiedenen Durchmessern - wobei im nachfolgenden immer von Spiralbohrern ausgegangen wird, die erfindungsgemäße Vorrichtung aber auch für zylindrische Werkzeuge bzw. Werkstücke jedweder Art benutzbar ist-sind Aufnahmeständer bekannt, in denen die betreffenden Spiralbohrer in entsprechend dimensionierten Lageröffnungen zur Lagerung und Bereitstellung eingesteckt sind. Die Lageröffnungen entsprechen dabei im wesentlichen dem Durchmesser des jeweiligen Spiralbohrers. Diese Ständer gibt es in verschiedenen Abmessungen und Formen. Gemeinsam ist allen, daß sie für die jeweilige Abmessung des Spiralbohrers eine dazu passende Bohrung im Ständer aufweisen, die zudem auch noch mit dem Nenndurchmesser des jeweiligen Spiralbohrers beschriftet sein kann.

Der Hauptzweck dieser Ständer ist es, die benötigten Spiralbohrer geordnet nach ihrem Durchmesser bereitzuhalten, damit der Benutzer den gewünschten Spiralbohrer leichter auffinden bzw. wieder einordnen kann. Dies ist um so wichtiger, wenn es sich um Spiralbohrer für Präzisionsarbeiten handelt, die mit 0,1 mm Steigung aufbewahrt werden. Die bekannten Ständer sind daher mit entsprechend eng tolerierten Aufnahmebohrungen versehen.

Sind die verwendeten Spiralbohrer in die richtigen Löcher eingeordnet, so ist das Auffinden eines gewünschten bestimmten Durchmessers leicht, insbesondere wenn die Nenndurchmesser an den Löchern angegeben sind. Desgleichen ist das Wiedereinordnen ebenfalls wieder leicht, wenn alle vorhandenen Aufnahmelöcher mit Spiralbohrern bestückt sind und nur der entnommene Bohrer wieder in das dann einzige freie Aufnahmeloch eingeordnet zu werden braucht. Auch wenn Aufnahmelöcher stark unterschiedlicher Durchmesser frei sind, ist das Wiederauffinden des richtigen Loches noch relativ einfach. Außerdem ist das Wiederauffinden des richtigen Aufnahmeloches auch dann leicht, wenn es sich um einen neuen Spiralbohrer handelt, bei dem der eingeprägte Nenndurchmesser noch deutlich lesbar ist. Bereits nach kürzester Lebensdauer aber wird die Prägung durch den Gebrauch meist unleserlich und fällt somit zur Bestimmung des Nenndurchmessers aus.

Die Problematik setzt dann ein, wenn Aufnahmelöcher aus benachbarten Nennbereichen, z. B. 2,3 mm - 2,6 mm frei sind, und die geprägten Bohrer-Nenndurchmesser unleserlich sind. Wenn der Benutzer sich dann über den Durchmesser nicht exakt sicher ist, kann er das entsprechende Aufnahmeloch nur zeitaufwendig durch Versuche feststellen. Sollte dieses dann aber durch häufige Benutzung ebenfalls im Durchmesser vergrößert sein, ist die Gefahr sehr groß, daß der jeweilige Bohrer in das falsche Aufnahmeloch gesteckt wird, mit der Folge, daß bei Verwendung des falsch eingeordneten Bohrers ohne Nachkontrolle eine falsche Bohrung hergestellt wird, die ggf. zur Unbrauchbarkeit des Werkstückes führen und somit hohe Kosten verursachen kann.

In der Praxis müssen deshalb die Bohrer vor der Einordnung mit einer Schieblehre gemessen werden. Sehr oft unterbleibt dies aber aus Bequemlichkeit oder aber weil gerade keine Schieblehre zur Hand ist, so daß die Bohrer einfach wahllos in eines der freien Löcher gesteckt werden und es deshalb sehr oft zu den vorgenannten Problemen kommt. Darüber hinaus ist das Messen mit der Schieblehre, das Ablesen des Wertes sowie die Einordnung in das entsprechende Aufnahmeloch ziemlich zeitaufwendig und lästig.

Aus dem gattungsbildenden DE-U- 75 04 525 ist eine Lehre zum Feststellen von innerhalb eines bestimmten Durchmesserbereiches in bestimmter Abstufung liegenden Durchmessergrößen von zylindrischen Gegenständen, insbesondere Bohrschäften, bekannt. Bei dieser bekannten Anordnung sind an einem Lehrenkörper zwei gerade, im spitzen Winkel zueinander verlaufende Messkanten oder Messflächen vorgesehen, deren gegenseitiger Abstand auf bestimmten Abschnitten ihrer Länge einer bestimmten angezeigten Größe eines Durchmessers entspricht. Bei dieser bekannten Anordnung kann zwar der Durchmesser, beispielsweise des Schaftes eines Bohres, bestimmt werden, dann aber muß der Bohrer aus dem Messkanal entnommen werden und in ein vom Messkanal entferntes Aufnahmeloch eingesteckt werden, wobei nunmehr aber das Ablesen des Durchmesserwertes notwendig ist, um den richtigen Bohrer in das richtige Aufnahmeloch einzusortieren.

Der Erfindung liegt die Aufgabe zugrunde, eine Haltevorrichtung zu schaffen, mit der ein sicheres Einordnen von zylindrischen Werkstücken schnell, ohne große Aufmerksamkeit und ohne daß ein Ablesen des Durchmesserwertes notwendig ist, durchgeführt werden kann.

Diese der Erfindung zugrundeliegende Aufgabe wird durch die Lehre des Patentanspruchs 1 gelöst.

Vorteilhafte Ausgestaltungen sind in den abhängigen Patentansprüchen 2 bis 12 erläutert.

Mit anderen Worten ausgedrückt, wird gemäß der Erfindung vorgeschlagen, daß jedem Aufnahmeloch in einer Haltevorrichtung eine entsprechende Messlehre zugeordnet wird und die Messlehren sind der Steigung des Nenndurchmessers angepaßt und können untereinander verbunden sein.

Im allgemeinen sind Bohrer einer bestimmten Größe in einer Reihe untergebracht, z. B. der Größe ab 4,1 mm um 0,1 mm steigend bis 5,0 mm und dann in einer zweiten Reihe mit 5,1 mm beginnend wieder um 0,1 mm steigend die nächste Bohrergröße. Die Anzahl der angeordneten Reihen ist beliebig, aber aus Zweckmäßigkeitsgründen werden Aufnahmevorrichtungen, z. B. in der Größe von 1,0 mm - 6,0 mm und dann von 6,1 mm - 10,0 mm hergestellt, so daß in einem Ständer im allgemeinen fünf Reihen Bohrer untergebracht werden können.

Die zugeordneten Messlehren befinden sich zweckmäßigerweise vor den entsprechenden Aufnahmelöchern, können sich aber genausogut hinter diesen befinden. Da die Anordnung der Aufnahmelöcher in den Haltevorrichtungen im allgemeinen so ist, daß die kleineren Abmessungen nach links und die größeren sich rechts befinden, ist auch die Anordnung der Messlehren entsprechend, d.h. die Messlehren passen sich in ihrer Anordnung der Anordnung der Aufnahmebohrungen an.

Den einzelnen Bohrerreihen untereinander können ebenfalls miteinander verbundene Messlehren zugeordnet sein, die jedoch nur auf den größten Nenndurchmesser der entsprechenden Reihe abgestimmt sind und im nachfolgenden als Grob-Lehren-Führung bezeichnet sind.

Bei einer erfindungsgemäßen Haltevorrichtung ist nun das Auffinden eines bestimmten Aufnahmeloches sehr einfach. Der Bohrer braucht nun nur noch in die miteinander verbundene Grob-Lehren-Führung eingeführt zu werden und wird dann in Richtung der kleineren Größe geführt, bis er an die Messlehre für den größten für die Reihe bestimmten Bohrer stößt. Damit ist eine Grob-Bestimmung vorgenommen und der Bohrer kann nun seitlich in der entsprechenden Messlehrenreihe, d.h. dem entsprechenden Messkanal, zur Feinbestimmung verschoben werden, bis er an die entsprechend passende Messlehre trifft und dann in das dazugehörige Aufnahmeloch gesteckt werden kann.

Die Messlehren können unterschiedlich ausgebildet sein. Hierbei können Messlehren vorgesehen werden, bei denen der Schaft des Bohrers mittels einer relativ dünnen und schmalen Lehre abgegriffen wird, oder auch Messlehren mit einer breiten Fläche zum Messen des Nenndurchmessers am Schneidteil, wobei die Breite so gewählt ist, daß sie mindestens in Abhängigkeit des Bohrer-Nenndurchmessers der halben Länge einer vollen Windung einer Spiralbohrersteigung entspricht. Da die Bohrer am Schaft jedoch sehr oft beschädigt sind und eine exakte Messung nicht zulassen, wird die Messung des Nenndurchmessers am Schneidteil bevorzugt.

Die Haltevorrichtung kann auch für andere Werkzeuge, die ggf. auch keine zylindrische Form aufweisen, eingesetzt werden.

Weitere vorteilhafte Ausgestaltungen der Erfindung werden nachfolgend anhand der Zeichnungen erläutert. Die Zeichnungen zeigen dabei in

Fig. 1 eine Draufsicht auf eine erste Ausführungsform einer erfindungsgemäßen Aufnahmevorrichtung, in

Fig. 2 eine Teildarstellung zur Verdeutlichung der Zuordnung von Grob-Lehren-Führung, Messkanal und Messlehre, in

Fig. 3 eine abgeänderte Ausführungsform, in

Fig. 4 eine wiederum abgeänderte Ausführungsform, in

Fig. 5 eine abgeänderte Ausführungsform bezüglich der Ausgestaltung der Messlehren und in

Fig. 6 eine weitere, abgeänderte Ausführungsform.

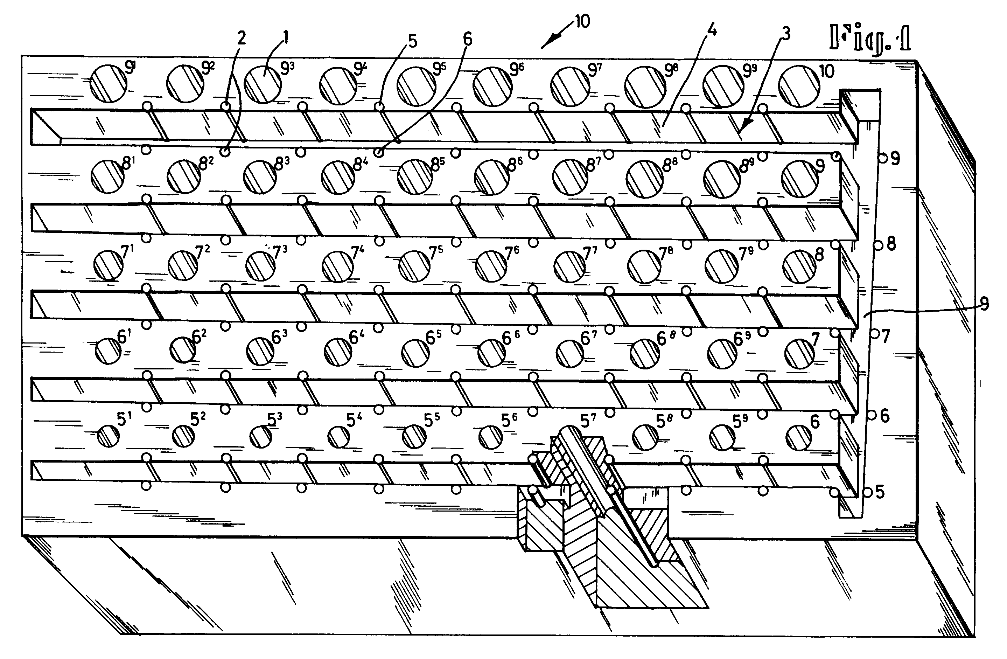

In Fig. 1 ist mit 10 eine Haltevorrichtung bezeichnet, die auch als Ständer bezeichnet werden könnte und die aus einem blockartigen, beispielsweise aus Kunststoff gefertigten Teil besteht. Hierbei kann die Haltevorrichtung 10 pultartig gestaltet sein, so daß eine leichte Zugänglichkeit geschaffen wird.

In der Haltevorrichtung 10 sind Aufnahmelöcher 1 vorgesehen, die dem jeweiligen Nenndurchmesser des zylindrischen Werkzeuges entsprechen, wobei in der Zeichnung diese Nenndurchmesser den Aufnahmelöchern 1 zugeordnet dargestellt sind.

Den Aufnahmelöchern 1 zugeordnet ist ein Messkanal 4, der eine Feinlehren-Führung 3 bildet und in dem eine Messlehre 2 jedem Aufnahmeloch 1 zugeordnet ist, wobei bei dem in Fig. 1 dargestellten Ausführungsbeispiel die Messlehre 2 durch Anschlagkörper 5 und 6 gebildet wird, die sich über die ganze Höhe des Messkanales 4 erstrecken, aus verschleißfestem Werkstoff bestehen. Am Beispiel des Aufnahmeloches mit der Größenangabe 9,5 mm wird deutlich, daß die beiden Anschlagkörper 5, 6, die links vom Aufnahmeloch 1 angeordnet sind, einen Abstand voneinander aufweisen müssen, der genau 9,4 mm entspricht. Ein Bohrer, der also 9,4 mm Nenndurchmesser oder kleiner aufweist, kann durch den durch die Anschlagkörper 5 und 6 gebildeten Raum hindurchgeführt werden, während ein Bohrer, der einen Nenndurchmesser aufweist, der größer als 9,4 mm ist, nicht durchgeführt werden kann. Hierbei handelt es sich dann um einen Bohrer, der eine Größe von 9,5 mm aufweist und der dann in das Aufnahmeloch, das mit der Kennziffer 9,5 bezeichnet ist, eingesteckt werden kann. Da sich die Messlehren für die Bohrer-Nenndurchmesser 9,6 und größer vor dem Aufnahmeloch 9,5 befinden, d.h. die Messlehre für 9,5 mm sich vor dem Loch 9,5 befindet, wird nur ein Bohrer von max. 9,5 mm diese Messlehre passieren können und bis zur Messlehre 9,4 vordringen. Ein Bohrer von 9,6 mm wird nicht in das Loch von 9,5 eindringen können, da er die vorgeschaltete Messlehre nicht mehr passieren kann.

Die Messkanäle 4 münden in einem Messkanal 9, der eine Grob-Lehren-Führung darstellt. Auch hier sind zusammenwirkende Messlehren aus Anschlagkörpern 5 und 6 vorgesehen und der in den Messkanal 9 eingeführte Bohrer kann also nur dann durch den Messkanal 9 hindurchgeführt werden, wenn er einen Nenndurchmesser aufweist, der kleiner als die jeweils erreichte Messlehre aus den Anschlagkörpern 5 und 6 ist.

Die Aufnahmelöcher 1 weisen eine Tiefe auf, die größer ist als die Tiefe des Messkanales 4. Hierdurch stehen die Bohrer so tief in den Aufnahmelöchern, daß ein problemloses Handhaben der in den Messkanälen 4 und 9 zu führenden Bohrern möglich wird. Dies wird besonders deutlich aus der Ausschnittsdarstellung in Fig. 1 unten.

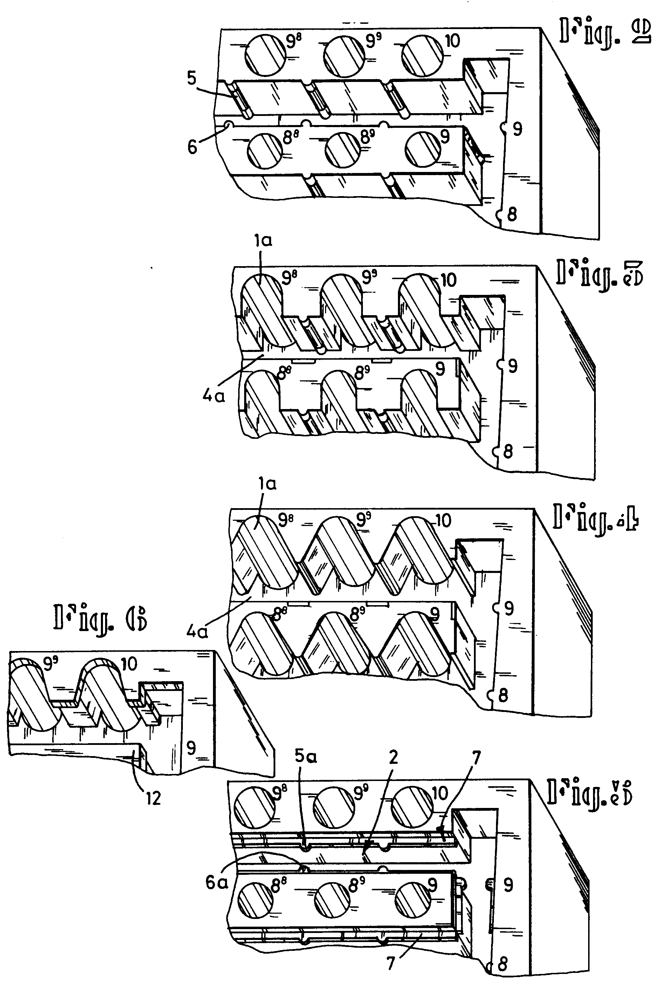

Bei dem Ausführungsbeispiel gemäß Fig. 2 ist deutlich erkennbar, daß in die im allgemeinen aus Kunststoff bestehende Haltevorrichtung 10 Anschlagkörper 5 und 6 eingesetzt sind, die aus einem anderen Werkstoff bestehen und die im wesentlichen nur über einen Teil der Höhe der durch die Anschlagkörper 5 und 6 gebildeten Messlehren verläuft.

Während bei der Ausführungsform gemäß Fig. 1 und 2 die Aufnahmelöcher 1 nicht mit den Messkanälen 4 in Verbindung stehen, wird bei der Ausführungsform gemäß den Fig. 3 und 4 so vorgegangen, daß die Aufnahmelöcher 1a zu den Messkanälen 4a hin offen sind, so daß dadurch ein leichteres Übergeben des zylindrischen Werkstükkes aus dem Messkanal in die Aufnahmelöcher möglich wird.

Bei der Ausführungsform gemäß Fig. 5 besteht die Messlehre 2 nicht aus einander gegenüberliegenden Anschlagkörpern 5 und 6, sondern wird durch Führungsleisten 7 gebildet, die mit entsprechenden Messlehren bildenden Vorsprüngen 5a und 6a ausgerüstet ist. Diese Anordnung eignet sich besonders dafür, wenn der Bohrerschaft gemessen werden soll. Auch kann gemäß Fig. 6 ein scherenartiger Blechstreifen 12 vorgesehen sein.

Wird der Bohrer am Schneidteil gemessen, ist es erforderlich, daß sich die Anschlagkörper 5 und 6 unter Berücksichtigung des Nenndurchmessers des Spiralbohrers zumindest über die halbe Länge einer vollen Windung einer Spiralbohrersteigung erstrecken.

In der Zeichnung nicht dargestellt, aber in den Rahmen der Erfindung fallend, ist die Möglichkeit, daß die Haltevorrichtung mit einem Abschlußdeckel ausgerüstet wird. Dann kann so vorgegangen werden, daß die eigentlichen Aufnahmelöcher 1 in dem Grundteil der Haltevorrichtung angeordnet sind und in dem Deckel die Messkanäle 4 und 9 mit den zugehörigen Messlehren untergebracht sind. Hierdurch kann ggf. die Handhabbarkeit der Vorrichtung noch verbessert werden. Auch können die Messlehren am Grundteil an der Vorderwand oder der Seitenwand angeordnet sein.

## Patentansprüche

1. Haltevorrichtung (10) zur Aufnahme von einen zylindrischen oder polygonalen Schaft aufweisenden Werkzeugen unterschiedlicher Abmessung in entsprechenden, in Reihe angeordneten Aufnahmelöchern (1), denen eine als langgestreckter Messkanal (4, 4a) ausgebildete Feinlehrenführung (3) zugeordnet ist, dadurch gekennzeichnet, daß die Feinlehrenführung (3) parallel zu den in Reihe angeordneten Aufnahmelöchern (1, 1a) angeordnet ist und jedem Aufnahmeloch (1, 1a) in oder an der Feinlehrenführung (3) eine Messlehre (2) zugeordnet ist.

2. Haltevorrichtung nach Anspruch 1, dadurch gekennzeichnet, daß in einer Haltevorrichtung (10) mehrere Messkanäle (4, 4a) mit zugeordneten Aufnahmelöchern (1, 1a) im wesentlichen parallel zueinander angeordnet sind, die in einen stirnseitig des Messkanales (4, 4a) rechtwinklig zu diesem verlaufenden, als Groblehrenführung dienenden Messkanal (9) münden.

3. Haltevorrichtung nach Anspruch 1 oder 2, dadurch gekennzeichnet, daß die Messlehren (2) als in den Raum des langgestreckten Messkanales (4) vorstehende verschleißfeste, einander gegenüberliegende Anschlagkörper (5, 6) ausgebildet sind.

4. Haltevorrichtung nach einem oder mehreren der vorhergehenden Ansprüche, dadurch gekennzeichnet, daß die Messlehren (2) als in den Raum des langgestreckten Messkanales (4) vorstehende verschleißfeste, über die ganze Länge des Messkanales (4) reichende Schlitzplatte (12) ausgebildet sind.

5. Haltevorrichtung nach einem oder mehreren der vorhergehenden Ansprüche 1 oder 2, dadurch gekennzeichnet, daß die Messlehren (2) als in den Raum des langgestreckten Messkanales (4) vorstehende verschleißfeste, die einander egenüberliegenden Anschlagkörper (5a, 6a) tragende Führungsleisten (7) ausgebildet sind.

6. Haltevorrichtung nach einem oder mehreren der vorhergehenden Ansprüche, dadurch gekennzeichnet, daß der Messkanal (4a) sich zum jeweiligen Aufnahmeloch (1a) ausdehnt und dieses einschließt.

7. Haltevorrichtung nach einem oder mehreren der vorhergehenden Ansprüche, dadurch gekennzeichnet, daß die Aufnahmelöcher (1, 1a) eine größere Tiefe als der Messkanal (4, 4a) aufweisen.

8. Haltevorrichtung nach einem oder mehreren der vorhergehenden Ansprüche, dadurch gekennzeichnet, daß die Haltevorrichtung (10) aus Kunststoff und die Messlehren (2) aus Metall bestehen.

9. Haltevorrichtung nach einem oder mehreren der vorhergehenden Ansprüche, dadurch gekennzeichnet, daß die Haltevorrichtung (10) pultförmig ausgebildet ist.

10. Haltevorrichtung nach einem oder mehreren der vorhergehenden Ansprüche, dadurch gekennzeichnet, daß die Tiefe des Messkanales (4) und die Länge der verschleißfesten Anschlagkörper (5, 6) einer Messlehre (2) mindestens die halbe Länge einer vollen Windung einer Spiralbohrersteigung der dem Meßkanal (4, 4a) zugeordneten Bohrergröße aufweisen.

11. Haltevorrichtung nach einem oder mehreren der vorhergehenden Ansprüche, gekennzeichnet durch einen Grundkörper, in dem die Aufnahmelöcher (1) vorgesehen sind und einen den Grundkörper und die in den Aufnahmelöchern (1) gelagerten Werkzeuge überdeckenden Deckel, an dessen Innenseite die Messkanäle (4) und (9) und die Messlehren (2) vorgesehen sind.

12. Haltevorrichtung nach einem oder mehreren der vorhergehenden Ansprüche, dadurch gekennzeichnet, daß der Grundkörper Aufnahmelöcher für die Werkzeuge und an geeigneter Stelle der Grundkörper, z. B. an der Vorderseite, an den Seitenwänden od. dgl., Messkanäle vorgesehen sind.

## Claims

1. Holding device (10) for locating tools having a cylindrical or polygonal shank and different dimensions in corresponding location holes (1) which are arranged in a row and to which a fine-gauge guide (3) designed as an elongated measuring channel (4, 4a) is allocated, characterized in that the fine-gauge guide (3) is arranged parallel to the location holes (1, 1a) arranged in a row, and a measuring gauge (2) is allocated to each location hole (1, 1a) in or at the fine-gauge guide (3).

2. Holding device according to Claim 1, characterized in that a plurality of measuring channels (4, 4a) having allocated location holes (1, 1a) are arranged essentially parallel to one another in a holding device (10), which measuring channels (4, 4a) lead into a measuring channel (9) running at right angles to the measuring channel (4, 4a) at the front end of the same and serving as a coarse-gauge guide.

3. Holding device according to Claim 1 or 2, characterized in that the measuring gauges (2) are designed as wear-resistant stop bodies (5, 6) projecting into the space of the elongated measuring channel (4) and facing one another.

4. Holding device according to one or more of the preceding claims, characterized in that the measuring gauges (2) are designed as a wear-resistant slotted plate (12) projecting into the space of the elongated measuring channel (4) and extending over the entire length of the measuring channel (4).

5. Holding device according to either of the preceding Claims 1 or 2, characterized in that the measuring gauges (2) are designed as wear-resistant guide strips (7) projecting into the space of the elongated measuring channel (4) and carrying the stop bodies (5a, 6a) facing one another.

6. Holding device according to one or more of the preceding claims, characterized in that the measuring channel (4a) extends up to the respective location hole (1a) and encloses the latter.

7. Holding device according to one or more of the preceding claims, characterized in that the location holes (1, 1a) have a greater depth than the measuring channel (4, 4a).

8. Holding device according to one or more of the preceding claims, characterized in that the holding device (10) is made of plastic and the measuring gauges (2) are made of metal.

9. Holding device according to one or more of the preceding claims, characterized in that the holding device (10) is designed in a desk shape.

10. Holding device according to one or more of the preceding claims, characterized in that the depth of the measuring channel (4) and the length of the wear-resistant stop bodies (5, 6) of a measuring gauge (2) are at least half the length of a full turn of twist-drill pitch of the drill size allocated to the measuring channel (4, 4a).

11. Holding device according to one or more of the preceding claims, characterized by a basic body in which the location holes (1) are provided and by a lid which covers the basic body and the tools mounted in the location holes (1) and on the inside of which the measuring channels (4) and (9) and the measuring gauges (2) are provided.

12. Holding device according to one or more of the preceding claims, characterized in that the basic body has location holes for the tools, and measuring channels are provided at a suitable point of the basic body, e.g. on the front side, on the side walls or the like.

## Revendications

1. Dispositif de logement (10) pour recevoir des outils de différentes dimensions présentant une tige cylindrique ou polygonale dans des trous de logement (1) correspondants disposés en rangées, auxquels est associé un guide de calibrage fin (3) conçu sous forme de canal jaugeur (4, 4a) qui s'étend longitudinalement, caractérisé en ce que le guide de calibrage fin (3) est disposé parallèlement aux trous de logement (1, 1a) disposés en rangées et qu'un calibre (2) est adjoint à chaque trou de logement (1, 1a) dans le guide de calibrage fin (3) ou contre celui-ci.

2. Dispositif de logement selon la revendication 1, caractérisé en ce que plusieurs canaux jaugeurs (4, 4a) avec les trous de logement (1, 1a) associés sont disposés sensiblement parallèlement entre eux dans un dispositif de logement (10) et en ce qu'ils débouchent dans un canal jaugeur (9) servant de guide de calibrage primaire situé à l'avant du canal jaugeur (4, 4a) et à angles droits avec celui-ci.

3. Dispositif de logement selon la revendication 1 ou la revendication 2, caractérisé en ce que les calibres (2) sont conçus sous forme de corps de butée (5, 6) opposés, résistant à l'usure et en saillie dans l'espace du canal jaugeur (4) longitudinal.

4. Dispositif de logement selon une ou plusieurs des revendications précédentes, caractérisé en ce que les calibres (2) sont conçus sous forme de platines perforées (12) résistant à l'usure, en saillie dans l'espace du canal jaugeur (4) longitudinal et s'étendant sur toute la longueur du canal jaugeur (4).

5. Dispositif de logement selon une ou plusieurs des revendications précédentes 1 ou 2, caractérisé en ce que les calibres (2) sont conçus sous forme de barrettes de guidage (7) résistant à l'usure et en saillie dans l'espace du canal jaugeur (4) longitudinal, et qui portent des corps de butée (5a, 6a) opposés l'un à l'autre.

6. Dispositif de logement selon une ou plusieurs des revendications précédentes, caractérisé en ce que le canal jaugeur (4a) s'élargit au niveau de chaque trou de logement (1a) et inclut celui-ci.

7. Dispositif de logement selon une ou plusieurs des revendications précédentes, caractérisé en ce que les trous de logements (1, 1a) présentent une plus grande profondeur que le canal jaugeur (4, 4a).

8. Dispositif de logement selon une ou plusieurs des revendications précédentes, caractérisé en ce que en ce que le dispositif de logement (10) est fait de matière plastique et les calibres (2) de métal.

9. Dispositif de logement selon une ou plusieurs des revendications précédentes, caractérisé en ce que le dispositif de logement (10) est conçu sous forme de pupitre.

10. Dispositif de logement selon une ou plusieurs des revendications précédentes, caractérisé en ce que la profondeur du canal jaugeur (4) et la longueur des corps de butée (5, 6) résistant à l'usure d'un calibre (2) présentent au moins la demi-longueur d'une spire complète d'une hélice de foret hélicoïdal de la dimension de foret associée au canal jaugeur (4, 4a).

11. Dispositif de logement selon une ou plusieurs des revendications précédentes, caractérisé par un corps de base dans lequel les trous de logement (1) sont prévus et par un couvercle recouvrant le corps de base et les outils entreposés dans les trous de logement (1), les canaux jaugeurs (4) et (9) et les calibres (2) étant prévus sur le côté latéral du couvercle.

12. Dispositif de logement selon une ou plusieurs des revendications précédentes, caractérisé en ce que des trous de logement pour les outils sont prévus dans le corps de base et des canaux jaugeurs sont prévus à un endroit approprié du corps de base par exemple sur l'avant, sur les parois latérales ou autres.

Fig. 1

EP 0 311 789 B1

Fig. 2

Fig. 3

Fig. 4

Fig. 5

Fig. 6